# EUROPÄISCHE PATENTSCHRIFT

(11) **EP 2 521 608 B1**
(45) Veröffentlichungstag und Bekanntmachung des Hinweises auf die Patenterteilung: **27.03.2019**
(21) Anmeldenummer: 10781612.6
(22) Anmeldetag: 10.11.2010
(51) Int. Cl.: B01D 65/10, G01N 15/08, B01D 67/00, B01D 69/02, G01N 30/88

(54) **VERFAHREN ZUR QUALIFIZIERUNG EINES NICHTPARTIKULÄREN ADSORBENS MITTELS SEKUNDÄRREAKTION**
METHOD FOR QUALIFYING A NON-PARTICULATE ADSORBENT BY MEANS OF A SECONDARY REACTION
PROCÉDÉ DE QUALIFICATION D'UN ADSORBANT NON PARTICULAIRE PAR UNE RÉACTION SECONDAIRE

(30) Priorität: 08.01.2010 DE 102010004190
(43) Veröffentlichungstag der Anmeldung: 14.11.2012
(73) Patentinhaber: Sartorius Stedim Biotech GmbH, 37079 Göttingen (DE)
(72) Erfinder: DEMMER, Wolfgang, 37077 Göttingen (DE); FABER, René, 37077 Göttingen (DE); HÖRL, Hans-Heinrich, 37120 Bovenden (DE); THIEFES, Axel, 37181 Hardegsen (DE)
(86) Internationale Anmeldenummer: PCT/EP2010/006852
(87) Internationale Veröffentlichungsnummer: WO 2011/082726

(56) Entgegenhaltungen:
- US-A- 3 082 076
- US-A- 3 733 265
- US-A- 4 636 288
- US-A1- 2003 089 664
- US-A1- 2004 185 472
- US-A1- 2009 145 831
- US-A1- 2009 220 940
- GITIS V ET AL: "Application of nanoscale probes for the evaluation of the integrity of ultrafiltration membranes", JOURNAL OF MEMBRANE SCIENCE, ELSEVIER SCIENTIFIC PUBL.COMPANY. AMSTERDAM, NL, Bd. 276, Nr. 1-2, 1. Mai 2006 (2006-05-01) , Seiten 185-192, XP024931417, ISSN: 0376-7388, DOI: DOI:10.1016/J.MEMSCI.2005.09.055 [gefunden am 2006-05-01]
- GITIS V ET AL: "Nanoscale probes for the evaluation of the integrity of ultrafiltration membranes", JOURNAL OF MEMBRANE SCIENCE, ELSEVIER SCIENTIFIC PUBL.COMPANY. AMSTERDAM, NL, Bd. 276, Nr. 1-2, 1. Mai 2006 (2006-05-01) , Seiten 199-207, XP024931419, ISSN: 0376-7388, DOI: DOI:10.1016/J.MEMSCI.2005.09.048 [gefunden am 2006-05-01]

## Beschreibung

Die vorliegende Erfindung betrifft ein Verfahren zur Qualifizierung eines nichtpartikulären Adsorbens mittels Sekundärreaktion.

Der vorliegenden Erfindung liegen die im Folgenden beschriebenen Begriffsbestimmungen zugrunde. Unter "adsorptiver Stofftrennung" versteht man die Abtrennung einer oder mehrerer Komponenten aus einer fluiden Phase durch selektive Adsorption dieser Komponente(n) an einer festen Phase, dem "Adsorbens" (*Plural* "Adsorbentien"). Das Feld der Erfindung betrifft die Stofftrennung in Flüssigkeiten, wobei die Flüssigkeit im Folgenden "Medium" und die Vorrichtung, in der die Adsorption ausgeführt wird, "Adsorber" genannt wird. Adsorbentien sind poröse Feststoffe, die über funktionelle Oberflächengruppen, welche "Liganden" genannt werden, mit bestimmten Komponenten von Fluiden selektiv Bindungen eingehen können. Neben den seit langem bekannten "partikulären Adsorbentien", auch Chromatographiegele genannt, haben sich weitere "nichtpartikuläre Adsorbentien" etabliert, welche auf einer gänzlich anders gearteten Matrix beruhen. Es handelt sich hierbei um sogenannte monolithische Adsorbentien aus einem dreidimensionalen porösen Festkörper oder Träger auf der Basis von mikroporösen Membranen aus diversen Polymeren. Als Adsorptionsmembranen werden flächige Adsorbentien mit von der einen Seite zur anderen durchgehenden Poren bezeichnet. Zielsubstanz(en) und/oder Kontaminant(en) werden erfindungsgemäß als "Adsorbend" bezeichnet und im Singular gebraucht, wobei es sich aber auch um mehrere unterschiedliche Substanzen handeln kann. Unter der "Kapazität" eines Adsorbens versteht man ein quantitatives Maß für sein Aufnahmevermögen für Adsorbend. Die Kapazität wird auf eine festgelegte Menge Adsorbens bezogen.

Die vorliegende Erfindung befasst sich mit nichtpartikulären Adsorbentien. Im Weiteren werden einige Beispiele genannt. Im Stand der Technik sind unterschiedliche nichtpartikuläre Anionen- und Kationenaustauscher bekannt. Als Beispiele werden starke Anionenaustauscher auf Basis von Adsorptionsmembranen wie Sartobind® Q der Fa. Sartorius Stedim Biotech GmbH, Mustang® Q der Fa. Pall Corp., Q Membran der Fa. Natrix Separations oder Monolithen wie CIM® QA der Fa. BIA Separations genannt. Weitere Beispiele sind schwache Anionenaustauscher wie Sartobind® D der Fa. Sartorius Stedim Biotech GmbH, Chromasorb® der Fa. Millipore oder CIM® EDA der Fa. BIA Separations. Weitere Beispiele für negativ geladene Adsorptionsmembranen sind der starke Kationenaustauscher Sartobind® S oder schwacher Kationenaustauscher Sartobind® C der Fa. Sartorius Stedim Biotech GmbH, die starke Kationenaustauscher-Membran Mustang® S der Fa. Pall Corp., S Membran der Fa. Natrix Separations oder starke Kationenaustauscher auf Basis von Monolithen, wie z.B. CIM® SO3, oder schwache Kationenaustauscher auf Basis von Monolithen, wie z.B. CIM® CM der Fa. BIA Separations.

Unter der Kapazität eines Ionenaustauschers versteht man ein quantitatives Maß für sein Aufnahmevermögen für austauschfähige Gegenionen. Es muss unterschieden werden zwischen der Gesamtkapazität und der nutzbaren Kapazität. Während die Gesamtkapazität die Gesamtmenge an austauschbaren Gegenionen angibt, bezieht sich die nutzbare Kapazität nur auf denjenigen Bruchteil, der unter den jeweiligen Betriebsbedingungen (z.B. pH-Wert der Lösung, Konzentration der Lösung, Art der Gegenionen) ausgenutzt werden kann. Adsorbend können Einzelmoleküle, Assoziate oder Partikel sein, bei denen es sich vorzugsweise um Proteine oder andere Substanzen biologischen Ursprungs handelt. Zielsubstanzen können beispielsweise rekombinante Proteine, wie z.B. monoklonale Antikörper sein. Kontaminanten können beispielsweise Viren, Proteine, Aminosäuren, Nukleinsäuren, Endotoxine, Proteinaggregate, Liganden oder deren Teile sein. Die Entfernung von Kontaminanten, deren Abwesenheit aus technischen, regulatorischen oder sonstigen Gründen erforderlich oder wünschenswert ist, wird als "negative Adsorption" bezeichnet.

Die meisten Anwendungen der Kontaminantenentfernung werden z. Zt. mit konventionellen Chromatographiegelen betrieben. Diese sind partikulär geformt und werden in Form von Schüttungen in Säulen betrieben. Nach Befüllen der Säule mit dem Medium schließt sich eine Prüfung auf Funktion und Integrität an. Dazu werden durch geeignete Lösungen von nicht-bindenden Molekülen wie Aceton oder Kochsalz die theoretische Bodenzahl/HETP und die Asymmetrie der Säulenfüllung bestimmt. Anhand von Grenzmustern kann dann auf die Güte der Säulenfüllung und Eignung für den Chromatographieschritt geschlossen werden. Die Chromatographiesäulen werden deutlich überdimensioniert, um ausreichende Flussraten zu erzielen. Die Säulen werden wiederverwendet, was einen erheblichen Reinigungs- und Validierungsaufwand bedeutet.

Die Ausführung chromatographischer Trennungen mit Hilfe von Adsorptionsmembranen wird auch Membranchromatographie genannt. Die Bezeichnung Adsorptionsmembran ist als Oberbegriff für verschiedene Arten von Adsorptionsmembranen, wie Ionenaustauschermembranen, Affinitätsmembranen, hydrophobe Membranen oder aktivierte Membranen, zu verstehen. Da Filtrationseffekte mit den adsorptiven Membranen eher unerwünscht sind, liegen die Porengrößen der im Industriemaßstab verwendeten adsorptiven Membranen meistens im Bereich von >0,4 µm. Adsorptionsmembranen bieten im Unterschied zu partikulären Adsorbentien die Möglichkeit, durch Anlegung einer hydraulischen Druckdifferenz zwischen den beiden Seiten ihrer Fläche eine Durchströmung mit dem Medium zu erzwingen, wodurch anstelle eines rein diffusiven Transportes der Adsorbenden in Richtung eines Konzentrationsgradienten ins Innere des Adsorbens ein konvektiver Stofftransport erreicht wird, der bei hohem Durchfluss sehr viel rascher erfolgen kann. Dadurch kann ein den partikulären Adsorbentien inhärenter Nachteil, der als "Diffusionslimitierung" bezeichnet wird, vermieden werden, der darin besteht, dass mit zunehmender Partikelgröße des Adsorbenden und zunehmender Molmasse des Adsorbenden die erforderliche Zeit zur Einstellung des Adsorptionsgleichgewichts erheblich zunimmt, was sich in einer Verschlechterung der Kinetik auswirkt. Aufgrund der beschriebenen Vorteile von Adsorptionsmembranen werden diese bevorzugt in Prozessen eingesetzt, in denen der Adsorbend im Medium in sehr geringen Konzentration in Relation zur Kapazität der Matrix vorliegt, so dass bezogen auf die Flächeneinheit des Adsorbens bis zur Erschöpfung der Kapazität ein großes Volumen des Mediums verarbeitet werden kann.

Typische Anwendungen sind im Bereich der negativen Adsorption, z. B. die Entfernung von Kontaminanten wie DNS, Viren, Wirtszellproteinen ("Host-Cell Proteins" (HCP), CHOP (Chinese Hamster Ovary Proteins), Endotoxinen aus antikörperhaltigen Lösungen mit positiv geladenen Adsorptionsmembranen. Diese kann (darf) irreversibel verlaufen, wenn das Adsorbens nur einmal verwendet werden soll. Der Durchbruch von Kontaminanten ist ein kritischer Faktor in validierten biopharmazeutischen Prozessen. Die Wirtszellproteine stellen ein breites Spektrum an unterschiedlichen Zellproteinen mit unterschiedlichen isoelektrischen Punkten (pl) und unterschiedlicher Größe und Affinität zum Adsorbens dar. Die Konzentration und Zusammensetzung der Kontaminanten hängen vom Expressionssystem und von den vorgeschalteten Aufreinigungsschritten ab. Typische Konzentrationen von Wirtszellproteinen in einem Protein-A-Pool liegen im Bereich von 500-5000 ppm (ng/mg Antikörper) und nach einem weiteren CEX-Schritt (Kationenaustauscher-Schritt) im Bereich von 50-500 ppm. Die Virusabreicherung wird in LRV ("log reduction value") angegeben. Sie entspricht dem negativen dekadischen Logarithmus des Verhältnisses der Viruskonzentration im Ausgangsmedium zur Viruskonzentration im Filtrat. LRV von 5 bedeutet daher, dass 99,999% der Viren durch das Adsorbens entfernt wurden. Ähnlich wird auch die Abreicherung von Endotoxinen in LRV angegeben.

Die Anwendung von Adsorptionsmembranen erfolgt im Allgemeinen in Modulen/Capsulen, die auch als "Membranadsorber" bezeichnet werden. Sie bestehen aus einem Gehäuse, in dem meist eine oder bevorzugt mehrere Lagen einer Adsorptionsmembran eingebaut sind. Die Adsorptionsmembran ist in dem Gehäuse so abgedichtet, dass der Durchfluss durch die Membranlagen zwingend ist. Die Bauformen ähneln den in der Membranfiltration üblichen Modulen (z. B. Wickelmodul, Stapelmodul etc.). Der Adsorber wird in der Regel anschlussfertig geliefert, wodurch das Packen des Adsorbers beim Anwender entfällt. Die Auslegung und die Form von Membranadsorbern wird an die im Vergleich zu den partikulären Chromatographiesäulen schnelle Betriebsweise angepasst. Das Verhältnis Höhe des Adsorptionsmembranstapels zu Anströmfläche ist im Falle von Membranadsorbern um Größenordnungen kleiner als bei Chromatographiesäulen. Die benötigten Mengen an Adsorptionsmembranen liegen in der Regel deutlich unter denen von Chromatographiegelen. Dadurch ist auch der Einfluss der Totvolumina und der Adsorberperipherie (Schläuche, Leitungen, Anschlüsse, Detektoren) größer als bei konventionellen Chromatographiesäulen. Die für die Chromatographie verwendeten Qualifizierungsmethoden, wie die Bestimmung der Bodenzahl/HETP oder der Asymmetrie der Säulenpackung, sind daher eher unempfindlich und nur sehr begrenzt für Membranadsorber anwendbar.

Folgende Kriterien sollen bei der Qualifizierung eines im Prozess installierten Adsorbens erfüllt und dokumentiert werden, damit ein applikationsgerechter Betrieb gewährleistet wird und die regulatorischen Anforderungen erfüllt werden:
A. Sind die richtigen funktionellen Gruppen vorhanden?
B. Ist ausreichende Menge an funktionellen Gruppen vorhanden?
C. Wird eine ausreichende Menge an funktionellen Gruppen beim Betrieb des Adsorbens erreicht?
D. Ist die Membranstruktur, der Membranstapel und die Anbindung der Membran an das Gehäuse fehlerfrei?

Sind alle diese vier Kriterien für ein Adsorbens erfüllt, ist erfindungsgemäß die Integrität dieses Adsorbens gegeben.

Im Mittelpunkt der Validierung von Membranadsorber-Systemen durch den Hersteller stehen Messungen von unterschiedlichen Parametern, wie z.B. Durchfluss, Bindekapazität für Modellmoleküle, Ligandendichte, mechanische Stabilität, chemische Kompatibilität und extrahierbare Substanzen. Analog zu den Säulen sind auch bei den Membranadsorbern die entsprechenden Nachweise zur Funktionalität und Integrität zu führen.

Eine der verwendeten Methoden ist ein Integritätstest mit Hilfe eines Testgerätes, welches für sterilfiltrierende Flachfilter und Filterkerzen entwickelt wurde. Ein kommerziell erhältliches Gerät ist z.B. der Sartocheck® 4 der Fa. Sartorius-Stedim Biotech GmbH. Dabei wird die Luftdiffusion durch einen mit Wasser benetzten Membranstapel bestimmt und mit einem integren Referenzmembranstapel verglichen. Ist die Diffusion oberhalb eines vorab bestimmten Referenzwertes, so liegt ein Defekt im Membranstapel vor. Diese Methode liefert jedoch nur eine Aussage über den oben aufgeführten Punkt D und ist damit nur begrenzt aussagekräftig.

In einem Verfahren (US Patent 7,281,410 B2, Oct. 16, 2007, Phillips, "*Method für determining an effective Peclet number for a membrane device*" und US Patent Application Publication US 2003/0089664 A1, May 15, 2003, Phillips, *Membrane Adsorber Device*) erfolgt die Bestimmung der Peclet-Zahl eines Membranadsorbers durch die Schritte a) Equilibrieren des Membranadsorbers mit einem Equilibrierungspuffer, b) Beladen des Membranadsorbers mit einer bekannten Konzentration eines spezifischen Adsorbenden in einem Equilibrierungspuffer, c) Detektion des Durchbruchs des Adsorbenden als Funktion von Zeit, Beladungsvolumen und anderen geeigneten Variablen, die mit der Menge des beladenen Adsorbenden zusammenhängen, d) Analysieren der Durchbruchkurve, um die entsprechende Flusscharakteristik des Membranadsorbers durch Berechnung der Schärfe der Durchbruchskurve zu bestimmen, e) Vergleichen der Ergebnisse vom Schritt d) mit einem bekannten integren Membranadsorber, um die effektive Peclet-Zahl zu bestimmen. Als Adsorbend wird z.B. Tosylglutaminsäure verwendet, deren Durchbruch durch Detektion der UV-Absorption detektiert wird.

Ein weiteres Verfahren (US Patent Application Publication US 2008/0299672 A1, Dec. 4, 2008, Nochumson et al., "*System and method for testing chromatography media and devices*") beschreibt eine Methode zur Bestimmung der Integrität einer Chromatographiemembran, eingeschweißt in einem Gehäuse, bei dem die Membran pulsartig mit einem Adsorbenden, wie z.B. Adenosinmonophosphat (AMP), unter Standardbedingungen beaufschlagt wird, anschließend das gebundene AMP mittels Pufferlösung eluiert wird und die Konzentration des AMP im Eluat zeitabhängig mittels UV-Absorption bei 260 nm gemessen wird. Die so erhaltene Extinktionskoeffizient-Zeit-Kurve wird verglichen mit der Extinktionskoeffizient-Zeit-Kurve eines integren Referenzmoduls. Beim Auftreten eines Defekts (Loch) tritt im Gegensatz zum integren Referenzmodul eine vorzeitige UV-Absorption auf.

Beide im Stand der Technik bekannten Verfahren verwenden ein "prozessfremdes" organisches Adsorbend, welches an dem Adsorbens zuerst in einem geeigneten Puffer adsorbiert wird. In dem Verfahren nach US 2008/0299672 A1 muss der Adsorbend vom Adsorbens eluiert werden. Dies stellt einen großen und entscheidenden Nachteil dar, da immer nachgewiesen werden muss, dass der Adsorbend vollständig aus dem Adsorbens und aus dem Prozessmedium bzw. Produkt entfernt wurde. Gegebenenfalls muss der Adsorbend in einem nachgeschalteten Prozessschritt entfernt werden. Dies stellt aus regulatorischen, ökonomischen und prozesssicherheitstechnischen Gründen eine signifikante Limitierung dar. Weiterhin zeigen die Methoden eine relativ geringe Empfindlichkeit der Detektion durch UV-Absorption und weisen damit eine relativ geringe Genauigkeit auf.

US 3,082,076 offenbart ein Verfahren zum Nachweis von Phosphationen einer KH₂PO₄-Lösung als Phosphormolybdänblau.

Der vorliegenden Erfindung liegt die Aufgabe zugrunde, eine Qualifizierungsmethode für nichtpartikuläre Adsorbentien, welche lonenaustauschersysteme umfassen, bereit zu stellen, welche eine hochempfindliche, robuste, einfache, nicht-destruktive Prüfung der Integrität und Funktionalität von nichtpartikulären Adsorbentien ermöglicht. Vorzugsweise sollen für die Qualifizierung Hilfsmittel (z.B. Messinstrumente, Testlösungen) verwendet werden, die keine Beeinträchtigung der Funktion des Adsorbens oder der Produktqualität bedeuten.

Diese Aufgabe wird durch die Bereitstellung eines Verfahrens zur Qualifizierung eines nichtpartikulären Adsorbens mittels Sekundärreaktion nach Anspruch 1 gelöst.

Im Speziellen beschreibt die Erfindung ein Verfahren, welches Fehlstellen oder Defekte in nichtpartikulären Adsorbentien, welche Ionenaustauschersysteme umfassen, mit einfachen Mitteln, robust, nicht-destruktiv und mit sehr hoher Empfindlichkeit detektieren kann.

Das Verfahren zur Qualifizierung eines nichtpartikulären Adsorbens, welches ein Ionenaustauschersystem umfasst, umfasst gemäß der vorliegenden Erfindung die Schritte des
a) Beladens des nichtpartikulären Adsorbens mit einem Adsorbenden, welcher Ionen umfasst, unter Bedingungen, unter denen die Ionen von dem nichtpartikulären Adsorbens zurückgehalten werden,
b) Detektierens der durchgebrochenen Ionen mittels Sekundärreaktion, wobei der negative dekadische Logarithmus der detektierten Grenzkonzentration pD ≥ 4 beträgt, und
c) Vergleichens der Durchbruchscharakteristik mit derjenigen eines nichtpartikulären Adsorbens bekannter Integrität.

Vorteilhafterweise lassen sich mit diesem Verfahren durch Anhebung des negativen dekadischen Logarithmus der detektierten Grenzkonzentration auf einen Wert pD ≥ 4 durch Sekundärreaktion sehr kleine Fehlstellen und Defekte detektieren. Damit einhergehend lässt sich vorteilhafterweise mit diesem Verfahren die Rückhaltefähigkeit für Kontaminanten, wie z.B. Viren, DNA und Endotoxinen, prüfen.

Gemäß der vorliegenden Erfindung eignet sich jegliche Sekundärreaktion, mit der sich eine entsprechende Nachweisempfindlichkeit für den durchgebrochenen Adsorbenden, welcher Ionen umfasst, auf die vorstehend beschriebene detektierbare Grenzkonzentration anheben lässt. Beispiele hierfür sind Komplexbildungen mit Fällungsreaktion oder mit Farbreaktion.

Bei einer Beschädigung und/oder eines Fehlers in der Herstellung eines nichtpartikulären Adsorbens verschiebt sich der Durchbruch und dessen Charakteristik dergestalt, dass dieser früher erfolgt, da die Rückhaltefähigkeit des nichtpartikulären Adsorbens beeinträchtigt ist und somit mehr Adsorbend im Vergleich zu einem intakten nichtpartikulären Adsorbens durchbrechen kann. Überraschender- und vorteilhafterweise kann gemäß der vorliegenden Erfindung aufgrund der Empfindlichkeit des Verfahrens auch bei nur geringer Beeinträchtigung des Adsorbens diese detektiert werden. Dies gelang bisher mit der UV-Absorption nicht.

Gemäß einer bevorzugten Ausführungsform der vorliegenden Erfindung ist die Beladung mit einem Adsorbend, welcher Ionen umfasst, reversibel. Damit ist gewährleistet, dass das nichtpartikuläre Adsorbens nach der Qualifizierung zu seiner entsprechenden Verwendung ohne Leistungseinbußen herangezogen werden kann.

Bei dem erfindungsgemäßen Verfahren werden Ionen verwendet, deren Einsatz die Funktionalität von lonenaustauschersystemen in den meisten biotechnologischen Anwendungen nicht beeinträchtigt, und es daher möglich ist, das Verfahren als sogenannten "pre-use test" vor der eigentlichen Anwendung beispielsweise eines lonenaustauschersystems einzusetzen. Erfindungsgemäß umfasst das Adsorbens im Qualifizierungsverfahren ein Ionenaustauschersystem. Nach der Qualifizierung des Adsorbens folgt erfindungsgemäß direkt die Equilibrierung für den entsprechenden Prozessschritt. Vorteilhafterweise kann das erfindungsgemäße Verfahren vor ("pre-use") und/oder nach ("post-use") der Verwendung des Adsorbens durchgeführt werden. Weiterhin lassen sich einige Prozessschritte, wie z.B. Sanitisierung des Adsorbens mit Lauge, in die erfindungsgemäße Qualifizierungsmethode integrieren, indem z.B. bei einem Anionenaustauscher der erste Schritt unter Sanitisierungsbedingungen wie 1N NaOH 30min lang durchgeführt wird. Ähnlich lässt sich der Regenerierungsschritt nach der Verwendung des Adsorbens z.B. mit 1N NaOH bei erhöhter Temperatur in das erfindungsgemäße Verfahren integrieren.

In dem erfindungsgemäßen Verfahren wird beispielsweise ein lonenaustauscher-Membranadsorber unter Standardbedingungen mit Ionen bis zum Erreichen des Durchbruchs der Ionen beaufschlagt. Der Durchbruch der Ionen wird durch Anwendung eines Komplexbildners und analytischen Nachweis des Ionen-Komplexes mit hoher Präzision und hoher Empfindlichkeit detektiert.

Die Empfindlichkeit eines analytischen Nachweises kann durch die Grenzkonzentration bzw. den pD-Wert beschrieben werden. Der Begriff Grenzkonzentration bezeichnet diejenige Konzentration eines nachzuweisenden Stoffes in g/ml, bei welcher der Nachweis noch positiv ist. Vereinfacht wird anstelle der Grenzkonzentration der pD-Wert eingeführt, der als negativ dekadischer Logarithmus der Grenzkonzentration definiert ist.

Gemäß der vorliegenden Erfindung beträgt der negative dekadische Logarithmus der detektierten Grenzkonzentration pD ≥ 4, bevorzugt pD ≥ 5, mehr bevorzugt pD ≥ 6.

Gemäß einer bevorzugten Ausführungsform der vorliegenden Erfindung umfassen die Ionen des Adsorbenden anorganische Kationen oder anorganische Anionen. Als anorganische Kationen können im erfindungsgemäßen Verfahren beispielsweise Calciumionen aus der Gruppe der löslichen Calciumsalze genannt werden. Ein Beispiel für anorganische Anionen im Sinne der vorliegenden Erfindung sind Phosphationen aus der Gruppe der Sauerstoffsäuren des Phosphors.

Es wurde gemäß der vorliegenden Erfindung überraschender- und vorteilhafterweise gefunden, dass bei der Beaufschlagung eines intakten Anionenaustauschers mit Phosphat-Ionen in Form der freien Säure oder ihrer wasserlöslichen Metallsalze, die Phosphat-Ionen vor Erreichen des Durchbruchs von der Membran adsorbiert werden und in dem Moment des Durchbruchs der Phosphat-Ionen die überschüssigen Phosphat-Ionen als Phosphormolybdänblau (C. H. Fiske und Y. P. Subbarow, J. Biol. Chem. 66, (1925) 375-400) mit großer Präzision und hoher Empfindlichkeit nachgewiesen werden können. Der Durchbruch der Phosphat-Ionen wird deutlich früher detektiert als bei den bekannten Verfahren.

Der in dieser Erfindung beschriebene Phosphatnachweis als Phosphormolybdänblau weist für Kaliumdihydrogenphosphat (KH₂PO₄) mit der Molmasse von 136,09 g/mol eine Grenzkonzentration von 1 nmol/ml bzw. 1,36 x 10⁻⁷g/ml auf und entspricht einem pD von 6,9. Damit ist die Empfindlichkeit dieses Nachweises um mehrere Größenordnungen höher gegenüber den bekannten Verfahren.

Es wurde gefunden, dass beim Vorhandensein eines Defekts im Membranadsorber der Durchbruch der Phosphat-Ionen vorzeitig erfolgt und sich deutlich von dem Durchbruch eines intakten Referenzadsorbermoduls unterscheidet. Ebenso werden Defekte in mehrlagigen Membranadsorbereinheiten detektiert, die sich nur in einer von mehreren (z.B. drei) Lagen befinden.

Analog dazu wurde bei der Beaufschlagung eines Kationenaustauschers mit Calcium-Ionen in Form des Chlorides gefunden, dass die Calcium-Ionen vor Erreichen des Durchbruchs von der Membran adsorbiert werden und der Moment des Durchbruchs der Calcium-Ionen durch Nachweis der überschüssigen Calcium-Ionen als schwerlösliches Calciumoxalat (G. Jander und E. Blasius, Einführung in das anorganische Praktikum, 8. Aufl., S. Hirzel Verlag, Stuttgart 1968, S. 84) durch Messung der Trübung des ausfallenden Calciumoxalats bestimmt werden kann.

Für den in diesem erfindungsgemäßen Verfahren angewandten Calciumnachweis als Calciumoxalat beträgt der pD-Wert 6,5 und ist damit den bisher bekannten Verfahren weit überlegen.

Bei den vorstehend beispielhaft beschriebenen Sekundärreaktionen gemäß der vorliegenden Erfindung handelt es sich im Falle der Phosphat-Ionen um eine Farbreaktion und im Falle der Calcium-Ionen um eine Fällungsreaktion. Die Detektion dieser Reaktionen erfolgt gemäß der vorliegenden Erfindung bevorzugt mittels eines photometrischen Verfahrens. Dabei wird gemäß dem Lambert-Beerschen Gesetz mittels voreingestellter Lösungen bestimmter Farbstoff- bzw. Trübstoffkonzentrationen die Extinktionen bei einer Wellenlänge gegen die entsprechenden Konzentration aufgetragen, womit eine Eichgerade erhalten wird. Anschließend können Lösungen mit unbekannter Konzentration vermessen und diese anhand der Eichgerade ermittelt werden.

Anhand dieser sehr empfindlichen Sekundärreaktion gemäß der vorliegenden Erfindung ist es möglich, den Durchbruch des Adsorbenden mit sehr hoher Genauigkeit nachzuverfolgen. Somit gelingt es erfindungsgemäß, die Integrität und Funktionalität von nichtpartikulären Adsorbentien exakt zu erfassen, auch wenn die Beschädigung und/oder Beeinträchtigung des zu untersuchenden Materials nur gering ist, und eine damit verbundene Beeinträchtigung beispielsweise in der Virenrückhaltung zu erkennen ist.

Die Figuren 1 bis 10 zeigen Eichgeraden und Durchbruchskurven, die nachfolgend im Rahmen der Beispiele näher erläutert werden.
Dabei zeigt Figur 1 eine Eichgerade zur Bestimmung der Phosphatkonzentration als Phosphormolybdänblau mittels UV-Extinktion bei 820 nm.
Figur 2 zeigt Durchbruchskurven an Membranadsorber Sartobind Q 100 für verschiedene Phosphatlösungen bzw. den Vergleich der Bestimmung des Durchbruchs anhand der Phosphatkonzentration und des pH-Werts im Ablauf.
Figur 3 zeigt Durchbruchskurven an 3-lagigen Membranadsorberstapeln mit künstlich herbeigeführten Fehlstellen für verschiedene Lochgrößen.
Figur 4 zeigt Durchbruchskurven an 3-lagigen Membranadsorber-Stapeln mit künstlich herbeigeführten Fehlstellen, Lochdurchmesser 450 µm, nass und trocken perforiert.
Figur 5 zeigt Durchbruchskurven an 3-lagigen Membranadsorberstapeln mit künstlich herbeigeführten Fehlstellen, Lochdurchmesser 450 µm, 1, 2 oder 3 Löcher versetzt in Stapellage oben (o), Mitte (m) und/oder unten (u), Anströmseite ist oben.
Figur 6 zeigt Durchbruchskurven an 3-lagigen Membranadsorberstapeln mit künstlich herbeigeführten Fehlstellen, Lochdurchmesser 450 µm, 1 einzelnes Loch pro Stapel, entweder in der Lage oben (o), Mitte (m) oder unten (u), Anströmseite ist oben.
Figur 7 zeigt eine Durchbruchskurve an 3-lagigem Membranadsorberstapel bei der Beaufschlagung einer mit Polyallylamin modifizierten Membran mit Phosphationen.
Figur 8 zeigt eine Eichgerade zur photometrischen Bestimmung der Calciumionenkonzentration als Calciumoxalat bei 600 nm.
Figur 9 zeigt eine Durchbruchskurve an 3-lagigem, integren Membranadsorberstapel ohne Loch, insbesondere den Verlauf der Calciumionenkonzentration im Auslauf anhand der Trübung im Vergleich zur Leitfähigkeit LF während der Beaufschlagung mit Calciumionen.
Figur 10 zeigt eine Durchbruchskurve an 3-lagigem Membranadsorberstapel mit Loch (1100 µm), insbesondere den Verlauf der Calciumionenkonzentration im Auslauf anhand der Trübung im Vergleich zur Leitfähigkeit LF während der Beaufschlagung mit Calciumionen.

Die vorliegende Erfindung sowie weitere sich daraus ergebende Vorteile werden in der nachfolgenden Beschreibung unter Bezugnahme auf die in den Beispielen beschriebenen Ausführungsformen näher erläutert.

### Beispiele

### Beispiele für Anionenaustauscher:

Für die Untersuchungen an den Anionenaustauschern wurden die nachfolgenden, in Tab.1 aufgeführten Chemikalien, verwendet.

**Tab. 1: Verwendete Chemikalien für die Untersuchungen an Anionenaustauschern**

| Substanz | Hersteller | Best. Nr. | Charge |
|---|---|---|---|
| Ascorbinsäure | VWR | 20150.231 | 07J030023 |
| Ammoniumheptamolybdat | ROTH | 3666.1 | 29782454 |
| Schwefelsäure | Merck | 7312500304 | K18980231 |
| NaH₂PO₄ | Merck | 106342.1000 | K91348242 732 |
| KH₂PO₄ | Merck | 104873.1000 | A672173 617 |
| NaOH | ROTH | 6771.1 | 27897776 |
| Na₃PO₄ | RIEDEL | | |
| | DE HAEN | 04277 | 72280 |

Das verwendete Wasser wurde einer Reinstwasser Anlage Typ Arium® der Fa. Sartorius-Stedim-Biotech GmbH entnommen.

### Beispiel 1: Bestimmung der Eichgeraden für die Phosphatbestimmung als Phosphormolybdänblau

Es wurden folgende Reagenzien angesetzt:
Reagenz A: 5 g Ascorbinsäure wurde in 50 ml Wasser gelöst.
Reagenz B: 6 N Schwefelsäure (36 ml einer 98%igen Schwefelsäure wurden zu 180 ml Wasser gegeben).
Reagenz C: 1,25 g Ammoniumheptamolybdat wurden in 50 ml Wasser gelöst.
Reagenz D: Wasser.

Es wurden je 50 ml Reagenz A, B und C mit 100 ml Reagenz D gründlich vermischt. Diese Arbeitslösung wurde vor jeder Bestimmungsreihe frisch angesetzt.

Als Standardlösung wurden 0,68 g KH₂PO₄ in einem Liter Wasser vollständig gelöst, dies entspricht 5 mmol/l.

Um eine Konzentrationsreihe zu erhalten, wurde die Standardlösung entsprechend Tab. 2 zu verschiedenen Konzentrationen verdünnt, anschließend wurde zu jeweils 2 ml dieser Standardlösungen 2 ml Arbeitslösung gegeben und gründlich gemischt. Die Ansätze wurden für 10 min in ein Wasserbad mit 70 °C gestellt. Danach wurden die Ansätze in einem Spektralphotometer bei 820 nm gegen einen Reagenzienleerwert (2 ml Wasser + 2 ml Arbeitslösung) in einer geeigneten Glasküvette vermessen.

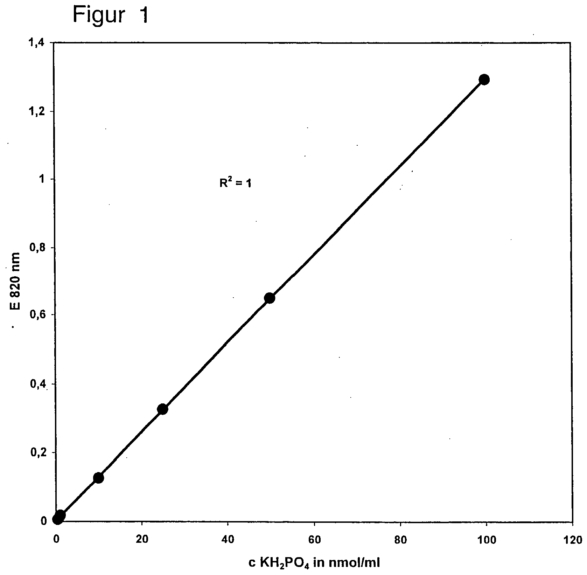

Eine typische Standardkurve ist in Tab. 2 und Fig. 1 dargestellt. Es zeigt sich eine lineare Abhängigkeit der UV-Extinktion zur eingesetzten Menge Phosphat. Das Bestimmtheitsmaß für die Gerade beträgt R² = 1,00.

**Tab. 2: Werte der Eichgeraden für die Phosphatbestimmung als Phosphormolybdänblau mittels UV-Extinktion**

| Phosphat in nmol/ml | Extinktion bei 820 nm |
|---|---|
| 0 | 0 |
| 0,4 | 0,006 |
| 0,5 | 0,007 |
| 1 | 0,017 |
| 10 | 0,128 |
| 25 | 0,327 |
| 50 | 0,650 |
| 100 | 1,293 |

### Beispiel 2: Durchbruchskurve an einer Membranadsorbereinheit bei der Beaufschlagung mit Phosphat-Ionen

Eine kommerziell erhältliche Membranadsorbereinheit mit der Bezeichnung Sartobind® Q 100, enthaltend 100 cm² einer stark basischen lonenaustauschermembran mit Trimethylamingruppen als ionenaustauschenden Gruppen, der Fa. Sartorius Stedim Biotech GmbH, wurde mit geeigneten Adaptern an eine Chromatographie-Anlage, Typ ÄKTA Prime plus der Fa. General Electric Healthcare angeschlossen. Die Anlage wurde nach den Vorgaben des Herstellers betrieben.

Die Einheit wurde nach Herstellerangaben entlüftet und in die Anlage eingesetzt.

Es wurde ein Programmablauf für die Chromatographieanlage geschrieben, welches die im Folgenden beschriebenen Schritte enthält. Die eingesetzten Mengen gelten für die beschriebene Bauform und werden für andere Bauformen und Adsorberflächen entsprechend angepasst.
1. Spülen des Adsorbens mit 20 ml einer Lösung von 1 mol/l NaOH in Wasser.
2. Waschen des Adsorbens mit Reinstwasser, bis die Leitfähigkeit im Ablauf unter 0,05 mS/cm gefallen war. Bei der verwendeten Bauform Sartobind® Q 100 wurden 50 ml Waschlösung programmiert.
3. Beaufschlagung des Adsorbens mit einer KH₂PO₄-Lösung (5 mmol/l) und gleichzeitige Fraktionierung des Ablaufs in vorzugsweise 20 Fraktionen mit 2 ml Volumen.
4. Aufzeichnen des geförderten Volumens und des pH-Wertes im Ablauf mit Hilfe einer Durchflusszelle für den pH-Wert.
Es wurde an den aufgefangenen Fraktionen die Phosphatbestimmung, wie im Beispiel 1 beschrieben, durchgeführt.

Die Messwerte für den Phosphatgehalt im Ablauf werden als Funktion des Filtratvolumens grafisch in einer Durchbruchskurve dargestellt.

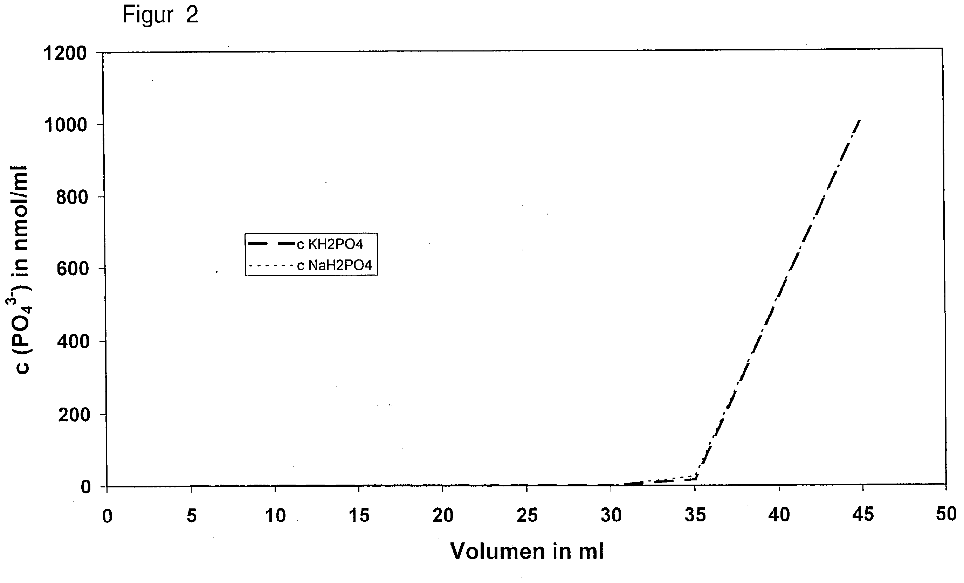

Fig. 2 zeigt den Verlauf der Phosphatkonzentration im Ablauf während der Beaufschlagung des Membranadsorbers mit KH₂PO₄-Lösung bzw. NaH₂PO₄-Lösung im Zulauf. Zu Beginn sind alle funktionellen Gruppen des Membranadsorbers durch die vorangegangene Spülung mit Natronlauge abgesättigt. Bei der Beaufschlagung des Membranadsorbers mit Kaliumdihydrogenphosphatlösung bzw. Natriumdihydrogenphosphatlösung beginnt der Austausch von OH⁻-Ionen gegen Phosphationen, dabei wird OH- freigesetzt. Bei Erreichen der Sättigung des Membranadsorbers werden keine weiteren OH⁻-Ionen mehr gegen Phosphationen ausgetauscht und die überschüssigen Phosphationen passieren den Membranadsorber, d.h. sie brechen durch. Betrachtet man den Verlauf der Konzentration der Phosphationen im Ablauf, so zeigt sich, dass die Phosphationenkonzentration während der Beaufschlagung des Membranadsorbers bei Null liegt, um dann bei Erreichen der Sättigung des Adsorbers stark anzusteigen. Die Lage des Phosphatdurchbruchs auf der x-Achse lässt sich anhand der auftretenden Phosphationen im Ablauf sehr genau detektieren. Ferner zeigt sich in Fig. 2, dass sowohl Kalium- als auch Natriumdihydrogenphosphat verwendet werden können. Die Ergebnisse lassen sich sehr genau reproduzieren.

### Beispiel 3: Nachweis künstlich herbeigeführter Fehlstellen in Membranadsorbern durch Aufnahme der Durchbruchkurve für Phosphat-Ionen für verschiedene Lochgrößen

Es wurde eine kommerziell erhältliche Membran des Typs Sartobind® Q, starker Anionenaustauscher, Bestell-Nr. 941EXQ42-001, der Fa. Sartorius Stedim Biotech GmbH verwendet. Drei Membran-Ronden mit einem Durchmesser von 5 cm wurden aus dem Flachmembranbogen gestanzt, zu einem 3-lagigen Stapel gelegt, in ein entsprechendes Gehäuse in eine Einspannvorrichtung gebracht und wie in Beispiel 2 in das Chromatographie-System integriert. Zur Simulation verschiedener Defekte in diesem Membranstapel wurden vor dem Einbau mittels Injektionsnadeln mit plan geschliffenen Spitzen Löcher mit den Durchmessern 450 µm, 600 µm und 1100 µm sowohl in trockene als auch mit Wasser benetzte Membranstapel gestanzt. Aufgrund der flexiblen Membranmatrix sind die Defekte in ihrer Größe und Form nicht streng definiert.

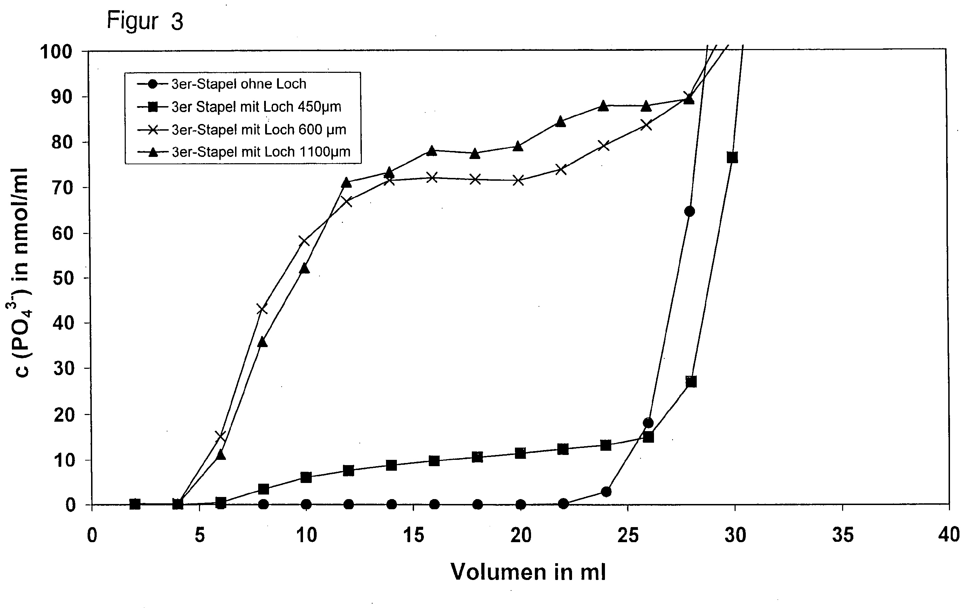

Die Beaufschlagung erfolgte mit Kaliumhydrogenphosphat-Lösung (1 mmol/l) und der Ablauf wurde in Volumina zu je 2 ml fraktioniert. Die Phosphat-Konzentration wurde wie in Beispiel 1 bestimmt und als Funktion des Filtratvolumens aufgetragen. Ein typischer Lauf ist in Tab. 3 und Fig. 3 dargestellt.

**Tab. 3: Durchbruchkurven an 3-lagigen Membranadsorber-Stapel mit künstlich herbeigeführten Fehlstellen für verschiedene Lochgrößen**

| | | **ohne Loch** | **Loch 450 µm** | **Loch 1100 µm** | **Loch 600 µm** |
|---|---|---|---|---|---|
| | **Vol** | **C (PO₄³⁻)** | **C (PO₄³⁻)** | **C (PO₄³⁻)** | **C (PO₄³⁻)** |
| **Fraktion** | **ml** | **nmol/ml** | **nmol/ml** | **nmol/ml** | **nmol/ml** |
| **1** | 2 | 0,00 | 0,08 | 0,23 | 0,00 |
| **2** | 4 | 0,00 | 0,00 | 0,15 | 0,23 |
| **3** | 6 | 0,00 | 0,45 | 11,21 | 15,15 |
| **4** | 8 | 0,00 | 3,41 | 35,76 | 42,95 |
| **5** | 10 | 0,00 | 6,06 | 52,12 | 58,11 |
| **6** | 12 | 0,00 | 7,58 | 70,98 | 66,74 |
| **7** | 14 | 0,00 | 8,79 | 73,18 | 71,36 |
| **8** | 16 | 0,00 | 9,77 | 77,88 | 71,97 |
| **9** | 18 | 0,00 | 10,61 | 77,27 | 71,59 |
| **10** | 20 | 0,00 | 11,52 | 78,86 | 71,36 |
| **11** | 22 | 0,23 | 12,42 | 84,39 | 73,79 |
| **12** | 24 | 2,88 | 13,26 | 87,80 | 78,94 |
| **13** | 26 | 18,11 | 15,08 | 87,73 | 83,56 |
| **14** | 28 | 64,55 | 26,97 | 89,24 | 89,70 |
| **15** | 30 | 147,35 | 76,29 | 102,05 | 107,27 |
| **16** | 32 | 196,97 | 170,45 | 143,71 | 156,06 |

Fig. 3 zeigt die Durchbruchskurven an 3-lagigen Membranadsorber-Stapeln, in denen künstlich Defekte (Löcher) eingebracht wurden, im Vergleich zu einem intakten Stapel. Der deutlich frühere Durchbruch des Phosphates in den Membranstapeln mit Loch gegenüber dem intakten Membranstapel ohne Loch ist deutlich zu sehen. So beginnt der signifikante Anstieg der Konzentration mit dem Stapel ohne Loch erst bei einem Volumen von 24 ml, in den Versuchen mit gelochten Stapeln schon bei Volumina von 6-8 ml.

Auch lässt sich eine Differenzierung der verschiedenen Lochdurchmesser erkennen. So liegt für die Lochdurchmesser von 1100 µm und 600 µm ein sofortiger Durchbruch nach Austritt des Totvolumens (ca. 5 ml) vor. Bei dem Stapel mit einem Lochdurchmesser von 450 µm tritt der Durchbruch bei etwas höherem Volumen auf und die Kurve verläuft flacher.

Die vorhandene Fehlstellen sind in allen Stapeln auf diese Weise eindeutig zu identifizieren.

### Beispiel 4: Nachweis künstlich herbeigeführter Fehlstellen in Membranadsorberstapeln durch Aufnahme der Durchbruchkurve für Phosphat-Ionen; Lochdurchmesser 450 µm, nass und trocken perforiert

Es werden Membranstapel, wie in Beispiel 3 beschrieben, hergestellt und verwendet. Es werden Löcher mit einem Durchmesser von 450 µm sowohl in nasse, als auch trockene Stapel gestanzt. Aufgrund der Flexibilität und eventueller Quelleffekte im nassen Zustand sind die resultierenden Löcher in ihrer Geometrie nicht exakt definiert.

**Tab. 4: Durchbruchkurven an 3-lagigen Membranadsorber-Stapeln mit künstlich herbeigeführten Fehlstellen; Lochdurchmesser 450 µm, nass und trocken perforiert**

| | | **ohne Loch** | **Loch 450 µm nass perforiert** | **Loch 450 µm trocken perforiert** |
|---|---|---|---|---|
| | **Vol** | **c (PO₄³⁻)** | **c(PO₄³⁻)** | **c (PO₄³⁻)** |
| **Fraktion** | **ml** | **nmol/ml** | **nmol/ml** | **nmol/ml** |
| **1** | 2 | 0,00 | 0,08 | 0,08 |
| **2** | 4 | 0,00 | 0,00 | 0,15 |
| **3** | 6 | 0,00 | 5,00 | 7,27 |
| **4** | 8 | 0,00 | 3,41 | 21,74 |
| **5** | 10 | 0,00 | 6,06 | 30,08 |
| **6** | 12 | 0,00 | 7,58 | 34,62 |
| **7** | 14 | 0,00 | 8,79 | 36,14 |
| **8** | 16 | 0,00 | 9,77 | 36,82 |
| **9** | 18 | 0,00 | 10,61 | 36,97 |
| **10** | 20 | 0,00 | 11,52 | 37,88 |
| **11** | 22 | 0,23 | 12,42 | 39,39 |
| **12** | 24 | 2,88 | 13,26 | 44,85 |
| **13** | 26 | 18,11 | 15,08 | 61,29 |
| **14** | 28 | 64,55 | 26,97 | 100,30 |
| **15** | 30 | 147,35 | 76,29 | 159,09 |
| **16** | 32 | 196,97 | 170,45 | 193,94 |

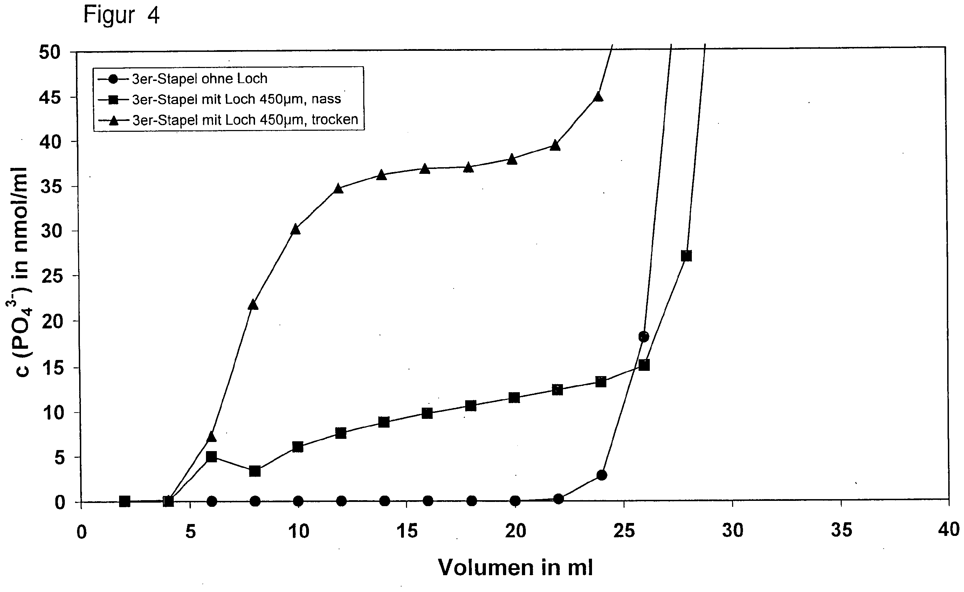

Fig. 4 zeigt die Durchbruchskurven an 3-lagigen Membranadsorber-Stapeln, in denen künstlich Defekte (Löcher) eingebracht wurden, im Vergleich zu einem intakten Stapel. Der deutlich frühere Durchbruch des Phosphats in den Membranstapeln mit Loch gegenüber dem intakten Membranstapel ohne Loch ist deutlich zu sehen. So beginnt der signifikante Anstieg der Konzentration mit dem Stapel ohne Loch erst bei einem Volumen von 22 ml, in den Versuchen mit den defekten Stapeln tritt der Durchbruch direkt nach Ablauf des Totvolumens von ca. 5 ml auf.

Der gegenüber dem intakten Membranstapel ohne Loch erheblich frühere Durchbruch des Phosphats ist sowohl bei den im nassen, als auch im trockenen Zustand perforierten Membranstapeln deutlich zu sehen. Das höhere Niveau des Durchbruchs beim trocken perforierten Stapel ist auf die größere Formstabilität des Loches in der trockenen Membranen, verglichen mit den nassen Membranen zurückzuführen.

Die vorhandene Fehlstellen sind in allen Stapeln auf diese Weise eindeutig zu identifizieren.

### Beispiel 5: Nachweis künstlich herbeigeführter Fehlstellen in Membranadsorberstapeln durch Aufnahme der Durchbruchkurve für Phosphat-Ionen für verschiedene Anzahlen von Fehlstellen; Lochdurchmesser 450 µm

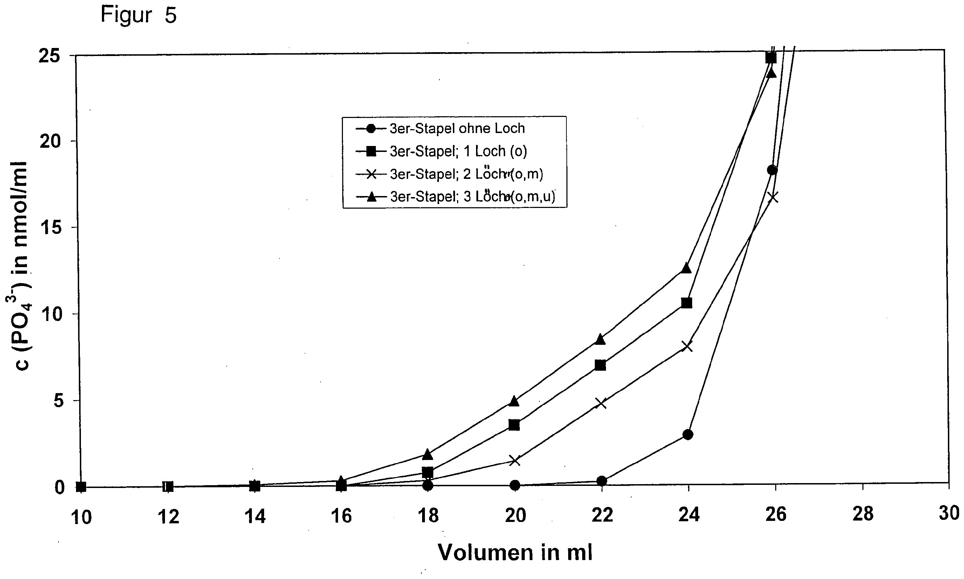

Es wurden Membranstapel, wie in Beispiel 3 beschrieben, hergestellt und verwendet. Es wurden Löcher mit einem Durchmesser von 450 µm sowohl in nasse, als auch trockene Stapel gestanzt. Die Löcher wurden entsprechend Tab. 5 und Fig. 5 in die obere (o), mittlere (m) oder untere (u) Membranlage gestochen. Anströmseite ist jeweils die obere Seite. Die Ergebnisse dieser Versuche sind in Tab. 5 und Fig. 5 dargestellt.

**Tab. 5: Durchbruchkurven an 3-lagigen Membranadsorber-Stapeln mit künstlich herbeigeführten Fehlstellen; Lochdurchmesser 450 µm; 1, 2 oder 3 Löcher versetzt im Stapel oben (o), Mitte (m) und/oder unten (u); Anströmseite ist oben**

| | | **ohne Loch** | 1 Loch (o) trocken perforiert | 2 Löcher (o,m) nass perforiert | 3 Löcher (o,m,u) nass perforiert |
|---|---|---|---|---|---|
| | **Vol** | **c (PO₄³⁻)** | **c(PO₄³⁻)** | **c (PO₄³⁻)** | **c (PO₄³⁻)** |
| **Fraktion** | **ml** | **nmol/ml** | **nmol/ml** | **nmol/ml** | **nmol/ml** |
| **1** | 2 | **0,0** | 0,0 | 0,0 | 0,0 |
| **2** | 4 | **0,0** | 0,0 | 0,0 | 0,0 |
| **3** | 6 | **0,0** | 0,0 | 0,0 | 0,0 |
| **4** | 8 | **0,0** | 0,0 | 0,0 | 0,0 |
| **5** | 10 | **0,0** | 0,0 | 0,0 | 0,0 |
| **6** | 12 | **0,0** | 0,0 | 0,0 | 0,0 |
| **7** | 14 | **0,0** | 0,0 | 0,0 | 0,1 |
| **8** | 16 | **0,0** | 0,0 | 0,0 | 0,3 |
| **9** | 18 | **0,0** | 0,8 | 0,3 | 1,8 |
| **10** | 20 | **0,0** | 3,5 | 1,4 | 4,8 |
| **11** | 22 | **0,2** | 6,9 | 4,7 | 8,4 |
| **12** | 24 | **2,9** | 10,5 | 8,0 | 12,5 |
| **13** | 26 | **18,1** | 24,6 | 16,5 | 23,8 |
| **14** | 28 | **64,5** | 68,0 | 48,9 | 61,4 |
| **15** | 30 | **147,3** | 155,3 | 129,8 | 146,9 |
| **16** | 32 | **197,0** | 197,0 | 197,0 | 197,0 |

Fig. 5 zeigt die Durchbruchskurven an 3-lagigen Membranadsorber-Stapeln mit unterschiedlicher Anzahl und Lage der Löcher im Vergleich zu einem intakten Stapel. So liegt der Durchbruch für den Membranstapel mit 1 Loch bei einem Volumen von 18 ml, für den Membranstapel mit 2 Löchern bei einem Volumen von 20 ml, für den Membranstapel mit 3 Löchern bei einem Volumen von 18 ml, verglichen mit dem Stapel ohne Löcher bei einem Volumen von 24 ml.

Die vorhandenen Fehlstellen sind in allen Stapeln auf diese Weise eindeutig zu identifizieren.

### Beispiel 6: Nachweis künstlich herbeigeführter Fehlstellen in Membranadsorber-Stapeln durch Aufnahme der Durchbruchkurve für Phosphat-Ionen für ein einziges nicht durchgehendes Loch pro Stapel

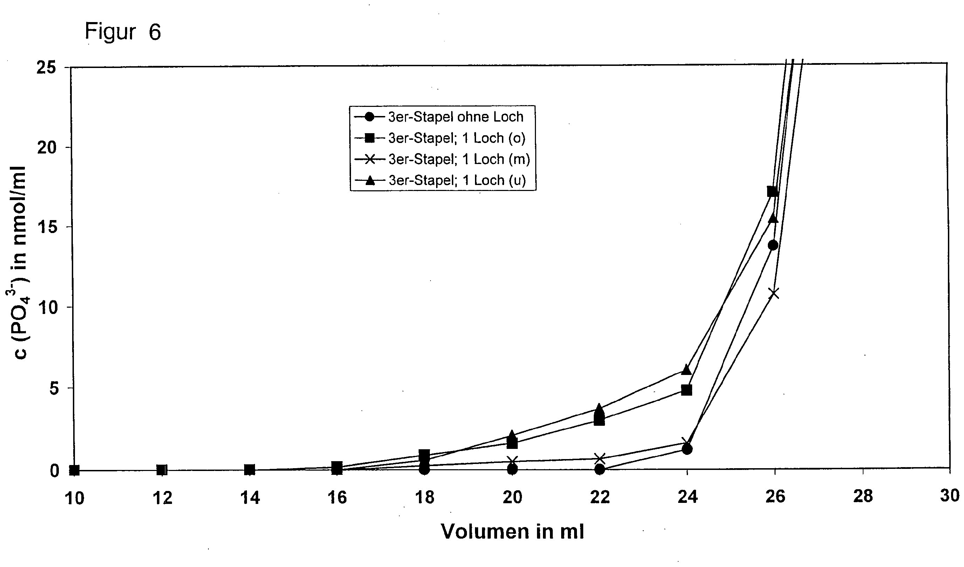

Es wurden Membranstapel, wie in Beispiel 3 beschrieben, hergestellt und verwendet. Es wurde ein einziges Loch (450 µm), wie in der Tab. 6 und Fig. 6 beschrieben, entweder in die obere (o), mittlere (m) oder untere (u) Membranlage gestochen. Die Ergebnisse dieser Versuche sind in Tabelle 6 und Fig. 6 dargestellt.

**Tab. 6: Durchbruchkurven an 3-lagigen Membranadsorber-Stapeln mit jeweils einem einzigen Loch pro Stapel, entweder in der Lage oben (o), Mitte (m) oder unten (u) ; Anströmseite ist oben; Lochdurchmesser 450 µm**

| | | **ohne Loch** | 1 Loch (o) trocken perforiert | 1 Loch (m) trocken perforiert | 1 Loch (u) trocken perforiert |
|---|---|---|---|---|---|
| | **Vol** | **c (PO₄³⁻)** | **c(PO₄³⁻)** | **c (PO₄³⁻)** | **c (PO₄³⁻)** |
| **Fraktion** | **ml** | **nmol/ml** | **nmol/ml** | **nmol/ml** | **nmol/ml** |
| **1** | 2 | **0,00** | **0,00** | **0,00** | **0,00** |
| **2** | 4 | **0,00** | **0,00** | **0,00** | **0,00** |
| **3** | 6 | **0,00** | **0,00** | **0,00** | **0,00** |
| **4** | 8 | **0,00** | **0,00** | **0,00** | **0,00** |
| **5** | 10 | **0,00** | **0,00** | **0,00** | **0,00** |
| **6** | 12 | **0,00** | **0,00** | **0,00** | **0,00** |
| **7** | 14 | **0,00** | **0,00** | **0,00** | **0,00** |
| **8** | 16 | **0,00** | **0,16** | **0,00** | **0,00** |
| **9** | 18 | **0,00** | **0,87** | **0,24** | **0,55** |
| **10** | 20 | **0,00** | **1,57** | **0,47** | **2,05** |
| **11** | 22 | **0,00** | **2,99** | **0,63** | **3,70** |
| **12** | 24 | **1,18** | **4,80** | **1,57** | **6,06** |
| **13** | 26 | **13,70** | **17,09** | **10,71** | **15,43** |
| **14** | 28 | **60,16** | **65,91** | **51,73** | **56,46** |
| **15** | 30 | **149,13** | **160,63** | **151,97** | **161,42** |
| **16** | 32 | **203,94** | **204,72** | **204,72** | **204,72** |

Fig. 6 zeigt die Durchbruchskurven an 3-lagigen Membranadsorber-Stapeln, mit einem einzigen Loch pro Stapel, welches sich in verschiedenen Lagen befindet, im Vergleich zu einem intakten Stapel.

Der gegenüber der intakten Membran erheblich frühere Durchbruch des Phosphats ist für alle Membranstapel mit Loch deutlich zu sehen. So liegt der Durchbruch für den Membranstapel mit einem Loch in der oberen Lage bei einem Volumen von 18 ml, für den Membranstapel mit einem Loch in der mittleren Lage bei einem Volumen von 22 ml und für den Membranstapel mit einem Loch in der unteren Lage bei einem Volumen von 20 ml, verglichen mit dem Stapel ohne Löcher bei einem Volumen von 24 ml. Dabei ist der Durchbruch im Versuch mit einem Loch in der mittleren Membran am geringsten ausgeprägt. Dies ist auf die ausgleichende Wirkung der beiden anderen Membranlagen zurückzuführen.

Die vorhandene Fehlstellen sind in allen Stapeln auf diese Weise eindeutig zu identifizieren.

### Beispiel 7 Durchbruchskurve an einem 3-lagigen Membranadsorberstapel mit einer durch Polyallylamin funktionalisierten Membran bei der Beaufschlagung mit Phosphat-Ionen

Es wurde eine wie in WO2009/127285 A1, Beispiel 21 beschrieben hergestellte, mit Polyallylamin modifizierte Membran der Fa. Sartorius Stedim Biotech GmbH verwendet. Drei Membran-Ronden mit einem Durchmesser von 5 cm wurden aus einem Flachmembranbogen gestanzt, zu einem 3-lagigen Stapel gelegt, in ein entsprechendes Gehäuse in eine Einspannvorrichtung gebracht und wie in Beispiel 2 in das Chromatographie-System integriert.

Es wurde ein Programmablauf für die Chromatographieanlage geschrieben, welches die im Folgenden beschriebenen Schritte enthält. Die eingesetzten Mengen gelten für die beschriebene Bauform und werden für andere Bauformen und Adsorberflächen entsprechend angepasst.
1. Spülen des Adsorbens mit 10 ml einer Lösung von 50 mmol/l HCl in Wasser.
2. Waschen des Adsorbens mit 60 ml Reinstwasser.
3. Beaufschlagung des Adsorbers mit einer Na₃PO₄-Lösung (1 mmol/l) und gleichzeitiger Fraktionierung des Ablaufs in vorzugsweise 20 Fraktionen mit 2 ml Volumen.
4. Aufzeichnen des geförderten Volumens und des pH-Wertes im Ablauf mit Hilfe einer Durchflusszelle für den pH-Wert.

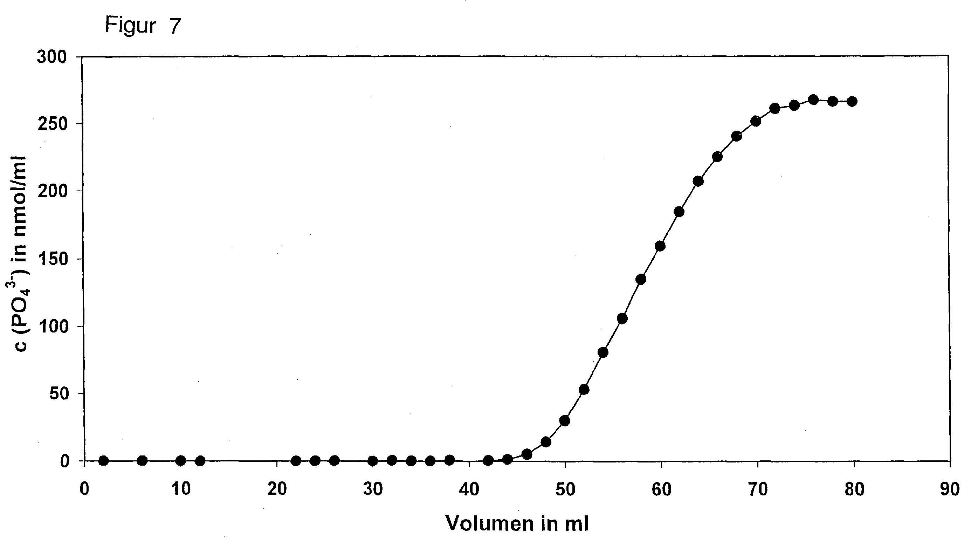

Die Phosphat-Konzentration in den aufgefangenen Fraktionen wurden, wie im Beispiel 1 beschrieben, bestimmt und als Funktion des Filtratvolumens aufgetragen (Figur 7).

Figur 7 zeigt den Verlauf der Phosphatkonzentration im Ablauf während der Beaufschlagung des Membranadsorbers mit Na₃PO₄-Lösung im Zulauf. Zu Beginn liegen die Polyallylamin-Liganden des Membranadsorbers durch die vorangegangene Spülung mit Salzsäure in der protonierten Form als NH₃⁺-Gruppen mit Cl⁻-Ionen als Gegenionen vor. Bei der Beaufschlagung des Membranadsorbers mit Natriumphosphatlösung beginnt der Austausch von Cl⁻-Ionen gegen Phosphationen. Bei Erreichen der Sättigung des Membranadsorbers werden keine weiteren Cl⁻-Ionen mehr gegen Phosphationen ausgetauscht und die überschüssigen Phosphationen passieren den Membranadsorber, d.h. sie brechen durch. Betrachtet man den Verlauf der Konzentration der Phosphationen im Ablauf, so zeigt sich, dass die Phosphationenkonzentration während der Beaufschlagung des Membranadsorbers bei Null liegt, um dann bei Erreichen der Sättigung des Adsorbers stark anzusteigen. Die Lage des Phosphatdurchbruchs auf der x-Achse lässt sich anhand der auftretenden Phosphationen im Ablauf sehr genau detektieren.

### Beispiele für Kationenaustauscher

Für die Untersuchungen an den Kationenaustauschern wurden die nachfolgenden aufgeführten Chemikalien verwendet.

| Substanz | Hersteller | Best. Nr. | Charge |
|---|---|---|---|
| HCl | ROTH | P074.3 | 27896844 |
| CaCl₂ | MERCK | 102382.500 | TA1171782 250 |
| AmmoniumOxalat | FLUKA | 09901 | 1343223 22208210 |

Das verwendete Wasser wurde einer Reinstwasser Anlage Typ Arium® der Fa. Sartorius-Stedim-Biotech entnommen.

### Beispiel 8: Bestimmung der Eichgeraden für die Calciumbestimmung als Calciumoxalat

Es wurden folgende Reagenzien angesetzt:
Reagenz E: 1 Mol/L HCl: 100 ml einer 32% HCl wurden zu 900 ml Wasser gegeben
Reagenz F: 2 mMol/L Calciumchlorid
Reagenz G: 1 mg/ml Ammoniumoxalat
Reagenz H: Wasser

Zu 2 ml Untersuchungslösung bzw. entsprechend verdünnten Standardproben wurden 2 ml Reagenz G gegeben und gründlich gemischt. Die Ansätze wurden für 20 min bei Umgebungstemperatur stehen gelassen. Danach wurden die Ansätze in einem Spektralphotometer bei 600 nm gegen einen Reagenzienleerwert (2 ml Wasser + 2 ml Reagenz G) in einer geeigneten Glasküvette vermessen.

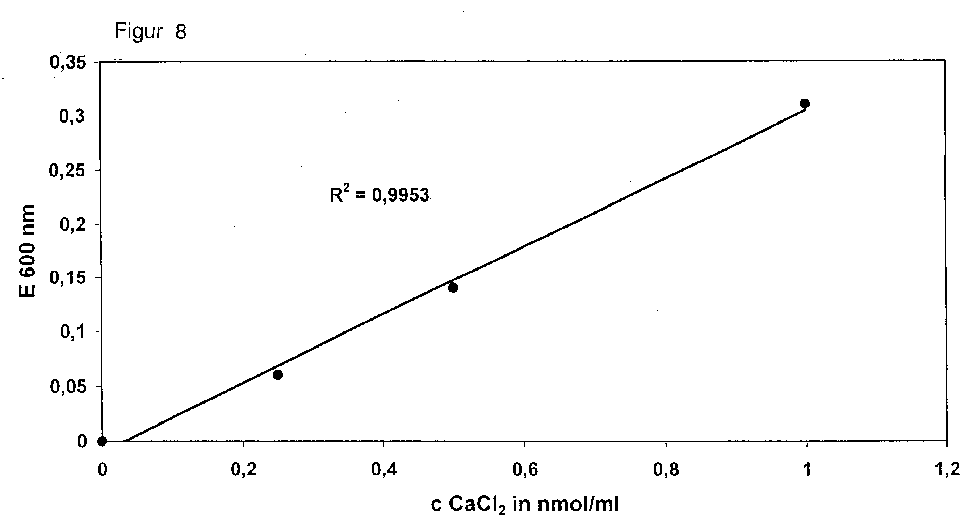

Typische Messwerte für die Standardkurve sind in Tab. 8 und Fig. 8 dargestellt.

**Tab. 8: Werte der Eichgeraden für die Calciumbestimmung als Calciumoxalat mittels photometrischer Trübungsmessung bei 600 nm.**

| µMol/L Ca²+ | E 600 |
|---|---|
| 0 | 0 |
| 0,25 | 0,06 |
| 0,5 | 0,14 |
| 1,0 | 0,31 |

Anmerkung: Mittelwert aus 4 Versuchen

### Beispiel 9: Durchbruchskurve an einem Membranadsorberstapel bei Beaufschlagung mit Calcium-Ionen

Es wurde eine kommerziell erhältliche Membranen des Typs Sartobind® S, starker Kationenaustauscher, Bestell-Nr. 94IEXS42-001, der Fa. Sartorius Stedim Biotech GmbH verwendet. 3 Membran-Ronden mit einem Durchmesser von 5 cm wurden aus dem Bogen gestanzt, zu einem 3-lagigen Membranadsorberstapel gelegt, in ein entsprechendes Gehäuse in eine Einspannvorrichtung eingebracht und wie in Beispiel 3 beschrieben in das Chromatographie-System integriert.

Es wurde ein Programmablauf für die Chromatographieanlage geschrieben, welches die im Folgenden beschriebenen Schritte enthält. Die eingesetzten Mengen gelten für die beschriebene Bauform und werden für andere Bauformen und Adsorberflächen entsprechend angepasst.
1. Spülen des Adsorbens mit 20 ml einer Lösung von 1 mol HCl in Wasser.
2. Waschen des Adsorbers/Adsorbens mit Wasser, bis die Leitfähigkeit im Ablauf unter 0,05 mS/cm gefallen war. Bei der verwendeten Bauform wurden 60 ml Waschlösung programmiert.
3. Beaufschlagung des Adsorbers/Adsorbens mit 40 ml calciumchloridhaltiger Lösung und gleichzeitiger Fraktionierung des Ablaufs in 20 Fraktionen mit 2 ml Volumen.
4. Aufzeichnen des geförderten Volumens, der Leitfähigkeit und des pH-Wertes im Ablauf mit Hilfe geeigneter Durchflusszellen für Leitfähigkeit und pH-Wert.

Es wurden an den aufgefangenen Fraktionen die Bestimmung der Calciumionenkonzentration wie im Beispiel 7 beschrieben durchgeführt.

Es wurden die Messwerte für pH-Wert, Leitfähigkeit und Calciumionenkonzentration im Ablauf als Funktion des Filtratvolumens grafisch in einer Durchbruchskurve dargestellt.

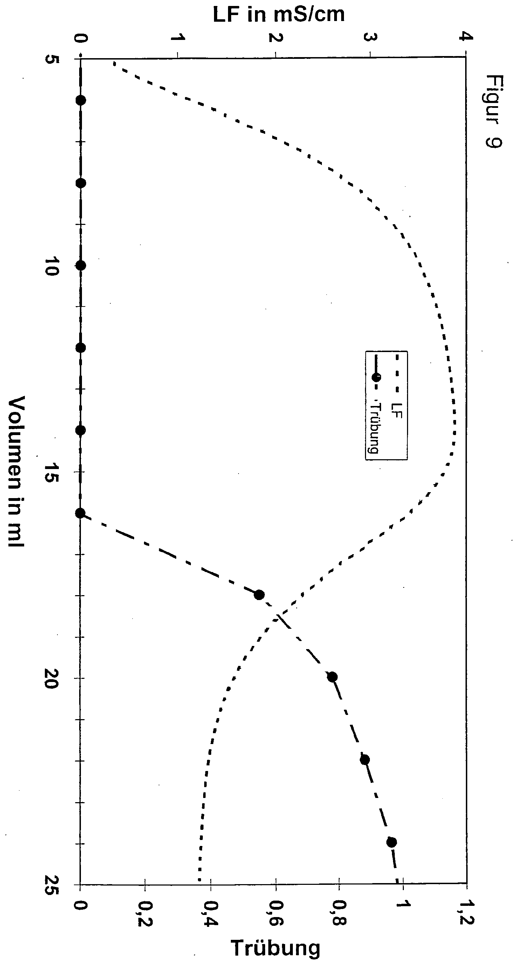

Fig. 9 zeigt den Verlauf der Leitfähigkeit und der Calciumionenkonzentration im Ablauf während der Beaufschlagung des Membranadsorbers mit Calciumchlorid-Lösung. Zu Beginn liegen alle funktionellen Gruppen (Sulfonsäureliganden) des Membranadsorbers durch die vorangegangene Spülung mit HCl in protonierter Form vor. Durch das Spülen mit Reinstwasser liegt die Leitfähigkeit unter 0,05 mS/cm. Bei der Beaufschlagung des Membranadsorbers mit Calciumchloridlösung beginnt der Austausch der gebundenen Protonen gegen Calciumionen. Die Protonen verlassen mit den Gegenionen Chlorid als Salzsäure (HCl) den Adsorber und dabei steigt die Leitfähigkeit durch die zunehmende Protonenkonzentration im Auslauf an. Sind alle Protonen durch Calcium-Ionen ersetzt, d.h. die Austauschkapazität des Adsorbers ist erschöpft, beginnt der Durchbruch überschüssiger Calcium-Ionen. Die Leitfähigkeit sinkt, da die Calciumionen eine geringere Leitfähigkeit aufweisen als die Protonen. Der Durchbruch wird üblicherweise durch die Lage des Wendepunktes der Leitfähigkeitskurve bestimmt.

Betrachtet man dagegen den Verlauf der Konzentration der Calciumionen im Ablauf, so zeigt sich, dass die Calciumionenkonzentration während der Beaufschlagung des Membranadsorbers bei Null liegt, um dann bei Erreichen der Sättigung des Adsorbens stark anzusteigen. Man erkennt, dass der Durchbruchswert, welcher durch die Calciumionenkonzentration im Ablauf bestimmt wurde, deutlich vor dem Durchbruchswert liegt, welcher durch die Leitfähigkeit bestimmt wurde. Das bedeutet, dass die chemische Bestimmung der Calciumionenkonzentration um Größenordnungen empfindlicher ist als die Veränderung der Leitfähigkeit.

### Beispiel 10: Nachweis künstlich herbeigeführter Fehlstellen in Membranadsorberstapeln durch Aufnahme der Durchbruchkurve für Calcium-Ionen

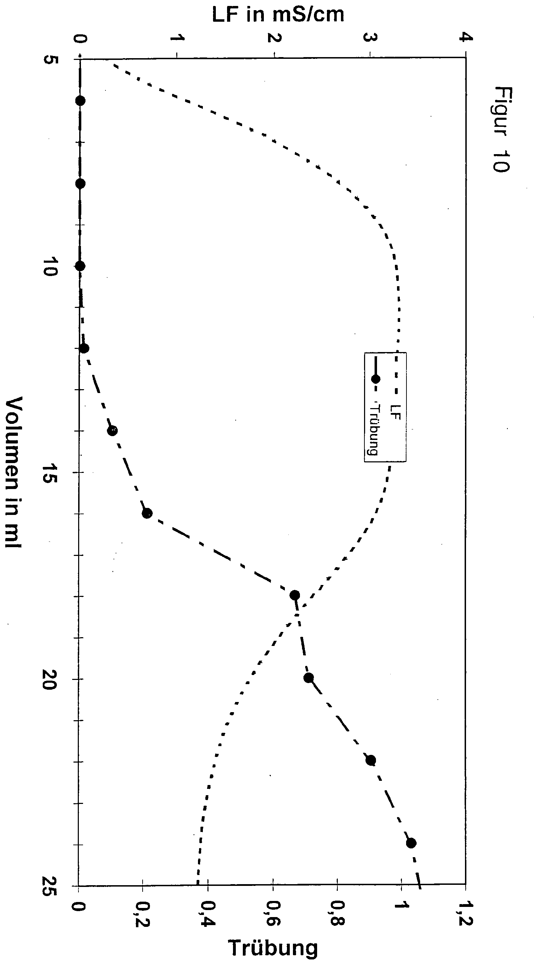

Es wurden Membranstapel wie in Beispiel 9 beschrieben hergestellt. Zur Simulation eines Defektes wurden vor dem Einbau mittels einer Injektionsnadel mit plan geschliffener Spitze und dem Durchmesser 1100 µm durchgehende Löcher in verschiedene Stapel gestochen. Während der Beaufschlagung mit der Calciumchlorid-Lösung (2 mmol/l) wurde der Ablauf in 2- ml-Volumina fraktioniert. Die Calciumionen-Konzentration wurde wie in Beispiel 9 bestimmt und über dem fraktionierten Volumen aufgetragen. Desweiteren ist der Verlauf der Änderung der Leitfähigkeit über dem fraktionierten Volumen in Fig. 10 aufgetragen.

Man erkennt deutlich in Fig. 10 gegenüber dem intaktem Membranstapel in Fig. 9, dass der Durchbruch der Calcium-Ionen, gemessen an der Calciumionen-Konzentration im Ablauf mit ca. 12 ml deutlich früher erfolgt als bei dem intakten Membranstapel ohne Loch mit ca. 16 ml. Die vorhandene Fehlstelle ist auf diese Weise eindeutig zu erkennen.

Betrachtet man dagegen in Fig. 10 den Verlauf der Leitfähigkeit, so lassen sich gegenüber dem intakten Membranstapel ohne Loch in Fig. 9 keine Veränderungen erkennen. Das bedeutet, dass durch die alleinige Leitfähigkeitsmessung eine Fehlstelle in dieser Größenordnung, wie sie ein Loch mit einem Durchmesser von 1100 µm darstellt, unter den hier gegebenen Versuchsbedingungen nicht detektierbar ist.

## Patentansprüche

1. Verfahren zur Qualifizierung eines nichtpartikulären Adsorbens, welches ein lonenaustauschersystem umfasst,
umfassend die Schritte des
- Beladens des nichtpartikulären Adsorbens mit einem Adsorbenden, welcher Ionen umfasst, unter Bedingungen, unter denen die Ionen von dem nichtpartikulären Adsorbens zurückgehalten werden,
- Detektierens der durchgebrochenen Ionen mittels Sekundärreaktion, wobei der negative dekadische Logarithmus der detektierten Grenzkonzentration pD ≥ 4 beträgt, und
- Vergleichens der Durchbruchscharakteristik mit derjenigen eines nichtpartikulären Adsorbens bekannter Integrität.

2. Verfahren nach Anspruch 1, wobei die Beladung mit einem Adsorbenden reversibel ist.

3. Verfahren nach Anspruch 1, wobei die Ionen anorganische Kationen oder anorganische Anionen umfassen.

4. Verfahren nach Anspruch 3, wobei die Kationen Calciumionen aus der Gruppe der löslichen Calciumsalze umfassen und die Anionen Phosphationen aus der Gruppe der Sauerstoffsäuren des Phosphors umfassen.

5. Verfahren nach einem der Ansprüche 1 bis 4, wobei die Sekundärreaktion eine Komplexbildung mit Fällungs- oder Farbreaktion umfasst.

6. Verfahren nach Anspruch 5, wobei die Fällungsreaktion die Bildung eines Calciumoxalat-Komplexes umfasst und die Farbreaktion die Bildung eines Phosphormolybdänblau-Komplexes umfasst.

7. Verfahren nach Anspruch 6, wobei die Detektion der Fällungs- und der Farbreaktion mittels eines photometrischen Verfahrens erfolgt.

8. Verfahren nach einem der vorhergehenden Ansprüche, wobei das nichtpartikuläre Adsorbens einen Monolithen oder eine Polymermembran umfasst.

9. Verfahren nach Anspruch 8, wobei an die Polymermembran mindestens ein Ligand gebunden ist.

## Claims

1. Method for qualifying a non-particulate adsorbent comprising an ion-exchange system, comprising the steps of
- loading the non-particulate adsorbent with an adsorbate which comprises ions, under conditions under which the ions are restrained by the non-particulate adsorbent,
- detecting the broken-through ions by means of secondary reaction, wherein the negative decadic logarithm of the detected limit concentration amounts to pD ≥ 4, and
- comparing the break-through characteristic with that of a non-particulate adsorbent of known integrity.

2. Method according to claim 1, wherein the loading with an adsorbent is reversible.

3. Method according to claim 1, wherein the ions comprise inorganic cations or inorganic anions.

4. Method according to claim 3, wherein the cations comprise calcium ions from the group of soluble calcium salts and the anions comprise phosphate ions from the group of oxygen acids of phosphor.

5. Method according to any one of claims 1 to 4, wherein the secondary reaction comprises a complex formation with a precipitation reaction or colour reaction.

6. Method according to claim 5, wherein the precipitation reaction comprises formation of a calcium oxalate complex and the colour reaction comprises formation of a phosphor molybdenum blue complex.

7. Method according to claim 6, wherein the detection of the precipitation reaction and colour reaction is carried out by means of a photometric procedure.

8. Method according to any of the preceding claims, wherein the non-particulate adsorbent comprises a monolith or a polymer membrane.

9. Method according to claim 8, wherein at least one ligand is bound to the polymer membrane.

## Revendications

1. Procédé de qualification d'un adsorbant non particulaire comprenant un système d'échange d'ions,
comprenant les étapes consistant à
- charger l'adsorbant non particulaire avec un adsorbant comprenant des ions dans des conditions dans lesquelles les ions sont retenus par l'adsorbant non particulaire,
- détecter des ions rompus au moyen d'une réaction secondaire, le logarithme décadique négatif de la concentration limite détectée pD étant ≥ 4, et
- comparer les caractéristiques de rupture avec celles d'un adsorbant non particulaire dont l'intégrité est connue.

2. Procédé selon la revendication 1, dans lequel la charge avec un adsorbant est réversible.

3. Procédé selon la revendication 1, dans lequel les ions comprennent des cations inorganiques ou des anions inorganiques.

4. Procédé selon la revendication 3, dans lequel les cations comprennent des ions calcium du groupe des sels de calcium solubles et les anions comprennent des ions phosphate du groupe des acides oxygénés du phosphore.

5. Procédé selon l'une des revendications 1 à 4, dans lequel la réaction secondaire comprend la formation d'un complexe avec une réaction de précipitation ou une réaction de coloration.

6. Procédé selon la revendication 5, dans lequel la réaction de précipitation comprend la formation d'un complexe d'oxalate de calcium et la réaction de coloration comprend la formation d'un complexe de bleu de phosphore et de molybdène.

7. Procédé selon la revendication 6, dans lequel la détection de la réaction de précipitation et de la réaction de coloration est effectuée au moyen d'un procédé photométrique.

8. Procédé selon l'une des revendications précédentes, dans lequel l'adsorbant non particulaire comprend un monolithe ou une membrane polymère.

9. Procédé selon la revendication 8, dans lequel au moins un ligand est lié à la membrane polymère.
